# EUROPEAN PATENT APPLICATION

(11) **EP 2 800 167 A1**
(43) Date of publication of application: **05.11.2014**
(21) Application number: 12862963.1
(22) Date of filing: 10.12.2012
(51) Int. Cl.: H01M 2/16

(54) **USE OF ANION-EXCHANGE MEMBRANE IN IRON-CHROMIUM LIQUID FLUID BATTERY**

(30) Priority: 29.12.2011 CN 201110449046
(71) Applicant: Ma, Zhiqi, Dalian, Liaoning 116000 (CN)
(72) Inventor: Ma, Zhiqi, Dalian, Liaoning 116000 (CN)
(74) Representative: Eisenführ Speiser
(86) International application number: PCT/CN2012/086299
(87) International publication number: WO 2013/097594

(57) **Abstract**

The present invention regarding the use of anion-exchange membranes for Fe/Cr redox cells belongs to the area of flow redox batteries (or flow redox cells). An anion exchange membrane works as a separator between the positive and negative electrodes in Fe/Cr redox flow cell. The said anion exchange membranes include those composed of quaternized-ammonium polyether ether ketone, quaternized-ammonium polyether sulfone ketone, or quaternary phosphonium salt functional groups, etc. The used anion exchange membrane, which consists of non-fluorinated polymer and has been tested well in fuel cells, has good anion selectivity for Cl⁻ and cost much less in the present invention. Another advantage of using anion exchange membranes is that, as the internal conductivity inside the cell is no longer dependent on protons, it allows the lower concentration of hydrochloric acid in the electrolyte solution. Not only does it reduce the side reaction of hydrogen evolution but also it potentially makes the electrolyte solution less harmful to the environment. Thus, the use of anion exchange membranes for Fe/Cr flow batteries can lower their production cost while keeping their high efficiency and potentially reduce their harmful impact to the environment.

## Description

### Technical Field

The present invention regarding the use of anion-exchange membranes for Fe/Cr redox cells belongs to the area of flow redox batteries (or flow redox cells).

### Background Art

A liquid redox flow battery (RFB) is a device of energy conversion, in which the electrical energy can be stored in the electrolyte solution during charging and the stored energy can be released back to electricity during discharging. In the RFBs, the electrolyte solution is in a liquid state so that it can be pumped into the battery for energy conversion or stored in tanks, if needed. A RFB system is composed of RFBs, liquid circulating pumps and pipes, electrolyte solution storage tanks, external power supplies and other key components, among which the RFBs are the core components for a whole system. As defined, the RFBs have wide applications in the electrical power systems with their properties. They can be used as efficient storage equipment for peak shaving, power quality, and load following and balancing in the traditional grids. More promisingly they can also function as key equipment systems of energy storage in the future smart grids, for instance, giving smooth outputs of wind and solar energy and other natural resources energy besides of those important functions for the traditional grids.

The RFBs are usually in the form of cell stacks composed of multiple cells with overlapping in series. The stacks can be electrically connected in series or parallel to form larger stack systems. Their numbers and sizes are determined by the detailed applications. Wherein one single cell usually consists of an end-plate, a current collector, a positive electrode, an electrolyte membrane (or ion exchange membrane), a negative electrode, and another current collector and another end-plate, it is a basic conceptual structure for all flow redox cells with the variety of electrochemical reaction couples. As one of such types of RFBs, a Fe/Cr flow battery works in the following mechanism. Firstly, the electrolyte solution with Fe²⁺ (i.e.FeCl₂) is pumped into the positive chamber of the battery while the electrolyte solution with Cr³⁺ (i.e.CrCl₃) is pumped into the negative chamber from the storage tanks. There exists a separator between positive electrode and negative electrode; the separator is a membrane, dense or porous, which separates positive and negative electrolyte solutions and has the role of transporting charge carriers such as protons or other positive/negative ions when the internal current flows through the separator during the cell operation of charging and discharging. As the cell voltage between the two electrodes is over its OCV of around 1.18V for charge with the supply of electricity, the electrochemical reaction takes place and the battery starts charging. Fe²⁺ ions are thus converted to Fe³⁺ ions at the positive electrode while Cr³⁺ ions are converted to Cr²⁺ ions at the negative electrode. Thereafter electrochemical reactions, the electrolyte solutions with more stored energy is cycled back and stored in their own storage tanks respectively. Generally the charging process is the conversion of chemical species via the electrochemical reactions at electrodes with a result of electrical energy stored in the electrolyte solution. On the other hand, when the external load needs energy output, the electrolyte solutions are pumped into the battery from the storage tanks respectively by the same flow transportation method as the above and it starts discharging. In fact, the discharging process is therefore the reversed electrochemical conversion with a result of stored energy released to the external load. With rational design and stable materials, this type of flow batteries is able to achieve much longer operation times under charge and discharge cycling than conversional solid-state batteries.

It can be seen from the paragraph above that an electrolyte membrane plays a key role in a flow battery to some extent dominating its performance. Proton exchange membranes were mostly employed in the research of Fe/Cr redox flow battery by the National Aeronautics and Space Administration (NASA) early in 1970s. Those membranes, however, didn't have good selectivity and their cost was high though their conductivity was large enough. In addition, the conductivity of proton exchange membranes also depends on the acid concentration in the electrolyte solutions. Higher acid concentration gives larger conductivity and higher corrosivity. The acid concentration also has a great impact on the concentrations of the active species for energy storage in the electrolyte solutions. NASA also tried anion exchange membranes but later gave up their use for RFBs since the performance anion exchange membranes, which were developed at that time, could not reach the requirement of the flow batteries. Some researchers employed cheap porous membranes in their study of Fe/Cr redox flow batteries instead of dense proton exchange membranes in order to reduce the cost further. Porous membranes, however, showed no ion selectivity and gave worse cross mixing of the electrolytes in two chambers of positive and negative electrodes. Thus, it resulted in a big energy loss so the energy efficiency of their flow batteries was only around 70%.

### Summary of Invention

Due to the defects and deficiencies of current RFB technology mentioned above, this invention provided one type of modern and cheap anion exchange membranes with their use for Fe/Cr redox flow batteries.

The mission of the present invention was carried out with the following measures: Anion exchange membranes were chosen to work as the electrolyte separators for the cells of Fe/Cr redox flow batteries. The anion exchange membranes used in the present invention included those of quaternized-ammonium polyether ether ketone (QAPEEK) polymers, quaternized-ammonium polyether sulfone ketone (QAPPESK) polymers, and polymers with quaternary pho8sphoniumsalt functional groups.

The said anion exchange membranes, were perm-selective to Cl⁻, with the permeability of Fe³⁺<150µg Fe³⁺/hr•cm²•M and with their conductivity≥ 0.006 S•cm⁻¹ at room temperature and atmospheric pressure, or their resistivity <2.5Ω•cm².

The said anion exchange membranes, their thickness was between 50 ∼ 300 µm.

The said redox flow batteries were referred as to single cells, or stacks consisting of multiple cells.

In the present invention, a single cell was composed of a current collector outside next to an electrode for each side, a positive electrode, a negative electrode, and an anion exchange membrane in between. The positive and negative electrodes were made of porous graphite felt, carbon Felt, carbon cloth, or carbon paper. The electrolyte solutions flew through porous electrodes on the fiber surface of which electrochemical reactions took place and the cycle of charging and discharging was conducted. The operation voltage of a single cell was usually between 0.6 ∼ 1.4 V. In the present invention a special designed anion exchange membrane, which selectively allows the permeation of Cl⁻ while blocking other cations mostly, was employed for the claimed RFB process.

The redox flow battery usually appeared in the shape of cell stack, which was constructed by folding multiple cells over each other in series, to output a larger voltage range for most practical applications. The stack usually had a general manifold passage for each side of all cells. And, the cells were assembled together with every two cells sharing a current collector, that is, a bipolar plate through which the current of the stack was conducted. At the two ends of the stack there was an end current collector plate for each side and a fixture endplate for binding the stack mechanically. Except of the cell at each end, the intermediate cells shared bipolar plates in between. The integrated design of stack would improve the energy density of the system and the capability of the convenient operation. Meanwhile, it allowed the simple and reliable seal design so that the battery system could possibly run at higher pressure if needed.

The anion exchange membranes employed in the present invention were the types of anionicnon-fluorinated polymer membranes, which were similarly made like the membranes tested in alkali hydrogen fuel cells. They performed good anion selectivity (for example, for Cl⁻) and were low cost. Another advantage of using anion exchange membrane was that it reduced the production cost of this type of flow battery system while it gave the batteries higher efficiency and potentially alleviated the harmful environmental impact.

### Brief Description of the Drawings

Fig.1 is Illustration of the schematic internal structure of a single cell in the present invention.
Fig.2 is Illustration of the schematic stack in the present invention.

### Detailed Description of the Preferred Embodiments

In the following sessions the present invention will be described in further details with specific examples.

### EXAMPLE 1

One type of anion exchange membranes was made of quaternized-ammonium polyether ether ketone (QAPEEK) polymers, commercially available from market. Their brief preparation process was expressed as follows: 1) the PEEK powder was placed in a reactor for halogenation under certain conditions; 2) further quaternary ammonium groups were introduced onto the molecular chains of the polymers with quaternization procedure prior to halogenation; and 3) the membranes were fabricated by adequate membrane preparation process, for example, a regular casting method.

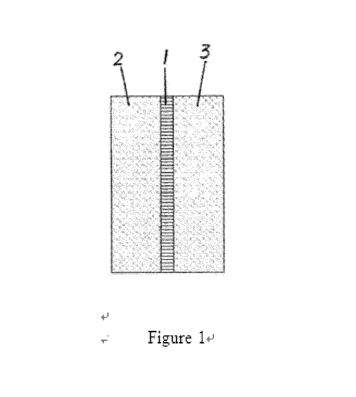

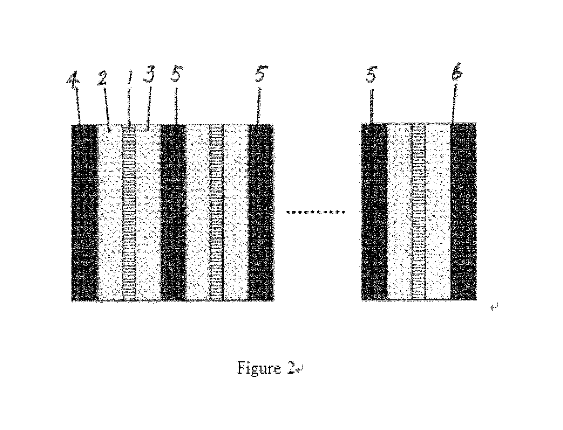

In this example the membrane of QAPEEK, which was prepared as described above, had been employed in Fe/Cr RFBs. Their internal structure of single cells was illustrated in Fig. 1, where a single cell was composed by a positive electrode (2), a negative electrode (3) and an anion exchange membrane(1) between (2) and (3). The structure of a stack was illustrated in Fig. 2 accordingly, composed of multiple cells with sharing bi-polar plates (5) in between. There existed one fixture end-plate binding a positive current collecting plate (4) and another end-plate binding a negative current collecting plate (6) respectively. Except of the two cells at the two ends, the intermediate cells shared bipolar plates as current collectors in between.

The detailed implementation process is: First cut a membrane foil with the size of 7.5 cm X 7.5 cm, of which the effective surface area is 5 cm X 4 cm, and the remaining area is of sealing area contact with seal gaskets.

There are an EPDM rubber seal gaskets and a 3 mm-thick graphite felt at each side of the membrane composing the positive and negative electrodes, in which the central part of the seal gasket is a square hole and can contact directly with the membrane. There is a bi-polar plate outside the two sides of the graphite felt and seal gasket, by which and the suitable fasteners all the layered materials are fixed together to form a single cell. There are liquid inlets and outlets on each bipolar plate. In this example only the single cell measurement was conducted, the composition of the cell stack is according to the method mentioned above. The electrolyte liquid is pumped into the cell through the feeding pump, with the flow of the liquid accurately controlled by certain methods. Heating is carried out by putting a heater in the electrolyte storage tank and the temperature can be adjusted by the temperature controller. Both the charging and discharging process of the battery are controlled by the programmable DC power supply and DC electronic load.

Table 1 shows the comparison of the measured and theoretical estimated performance of the Fe/Cr flow batteries with using the three anion exchange membranes of different thickness as described above and the anion exchange membrane by Lewis Research Center (LRC), NASA. Wherein the LRC anion exchange membrane was co-developed by Ionics in 1970s, the membrane polymers were synthesized of 2 - vinyl pyridine plastic, Ethylene glycol dimity acrylate and Chloromethyl vinyl benzene, with the named code of CD1L. However, this anion exchange membrane was not tested in flow batteries under 65 °C due to its poor conductivity and selectivity probably. Finally LRC gave up further study of this membrane in RFBs. Therefore, only the performance results of room temperature were listed in Table 1 but the membrane was still of heat treatment. Fe/Cr RFBs, nevertheless, are not suitable to operate under room temperature. Their optimum operation temperature is above 65 °C. The QAPEEK membranes are dense and stable to only allow Cl⁻ and H⁺ to permeate theoretically due to their high selectivity. The resistivity of the membranes (70 µm) was measured at 20 °C, around1.17 Ω•cm²and decreased significantly as the temperature rose to 65 °C. Thus both the voltage loss and the current loss of Fe/Cr RFBs would be very low with this type of anion exchange membranes. And, the electrolyte solutions could just cross-mix slightly between the positive and negative electrode chambers so the self-discharging effect was reduced remarkably for the RFBs. Finally the overall energy conversion efficiency was possibly improved significantly as high as greater than 90 %.

Consequently, Table 1 also shows the effects of membrane thickness on the battery performance. The larger the membrane thickness, the better their mechanical strength and stability, but the slightly smaller their membrane conductivity. The voltage loss, though the Couloumbic efficiency increases to some extent, got larger and the voltage efficiency worse in spite relatively the overall energy conversion efficiency decreases slightly but still around 88%.

### EXAMPLE 2

Another type of anion exchange membranes was made of quaternized-ammonium polyether sulfone ketone materials (QAPPESK), commercially available from market. Except of the raw polymer materials of polyether sulfone ketone different from those of polyether ether ketone used in Example 1, the preparation method of ammonium quaternization and the fabrication methode of membranes were similar to those of QAPEEK of Example 1. QAPPESK membranes were produced finally and the test of battery performance was with the same equipment and similar methods.

Table 2 shows the comparison of the performance of Fe/Cr flow batteries with QAPPESK and NASA membranes. QAPPESK membranes, as dense separators, could only allow to permeate Cl⁻ theoretically with their ion selectivity close to 100 %. It shows that the battery performance of the cells with this type of membranes was even better than that of the cells of Example 1. Their resistivity (120 µm, measured at 30 °C) was only 1.09Ω•cm², lower than that of QAPEEK membranes with the same thickness, also decreasing rapidly as the temperature goes up to 65 °C. As a result, the use of these membranes led to the relatively smaller voltage loss and the current loss similar to that of the batteries of Example 1. Furthermore, the electrolyte solutions almost had no cross-mixing between the positive and negative electrodes in the cells. It made the self-discharging of batteries neglected. Thus the overall energy conversion efficiency of the batteries was also greater than 90 %. Table 2 shows the battery performance of the cells with the three QAPEEK anion exchange membranes of different thickness. It is expressed that the higher voltage efficiency and energy efficiency of Fe/Cr flow cells would be achieved with relatively thicker membranes. Finally they guaranteed the efficient energy conversion and the longer membrane life time. Accordingly, it would extend the lifetime of the battery systems with the reduction of their maintenance cost in the future.

**Table 1 Comparison of the performance of Fe/Cr flow batteries with QAPEEK and NASA membrane.**

| Membrane types | Ion exchange types | thickness (µm) | resistivity (Ω•cm2 ) | | selectivity (µg Fe3+/hr•c m2•M) | | Couloumbic efficiency(%) | Voltage efficiency(%) | Energy efficiency(%) |
|---|---|---|---|---|---|---|---|---|---|
| | | | 20 □ | 65 □ | 20 □ | 65 □ | | | |
| NAS A CD1L membrane | Cl⁻ | 520 | 4.2 | 2.1 | 20 | 168 | 95* | | |
| QAP EEK membrane for Example 1 | Cl⁻ | 70 | 1.17 | 0.58** | Hard to detect | < 150 | 97** | 94** | 91** |
| | | 120 | 2 | 0.99** | Hard to detect | < 150 | 97** | 93** | 90** |
| | | 150 | 2.5 | 1.24^{**} | Hard to detect | < 150 | 98** | 90** | 88** |

| | | | | | | | | | |
|---|---|---|---|---|---|---|---|---|---|
| * The membranes were rapidly quenched to 25°C after heat treatment at 75°C; the current density of the cells was 21.5 mA/cm². ** Under 65 °C and atmospheric pressure, the values of resistivity and efficiency were theoretically estimated. | | | | | | | | | |

**Table 2 Comparison of the performance of Fe/Cr flow batteries with QAPPESK and NASA membranes**

| Membrane types | Ion exchange types | thickness (µm) | resistivity (Ω•cm²) | | selectivity (µg Fe³⁺/hr•c m²•M) | | Couloumb efficiency(%) | Voltage efficiency (/or | Energy efficiency(%) |
|---|---|---|---|---|---|---|---|---|---|
| | | | 20 □ | 65 □ | 20 □ | 65 □ | | | |
| NAS A CD1L membranes | Cl⁻ | 520 | 4.2 | 2.1 | 20 | 168 | 95* | | |
| QAPP ESK membranes for Example 2 | Cl⁻ | 70 | 0.63 | 0.33** | Hard to dete ct | < 150 | 97** | 96** | 93** |
| | | 120 | 1.09*** | 0.55** | Hard to detect | < 150 | 98** | 95** | 93** |
| | | 150 | 1.36 | 0.69** | Hard to detec | < 150 | 99** | 92** | 91** |

| | | | | | | | | | |
|---|---|---|---|---|---|---|---|---|---|
| * The membranes were rapidly quenched to 25°C after heat treatment at 75°C; the current density of the cells was 21.5 mA/cm². ** Under 65 °C and atmospheric pressure, the values of resistivity and efficiency were theoretically estimated. *** the value was tested under 30 °C. | | | | | | | | | |

## Claims

1. An application of anion-exchange membranes in new type of Fe/Cr redox flow batteries, wherein the anion-exchange membranes work as separators between positive and negative electrodes in the new type of Fe/Cr redox flow batteries.

2. Application according to Claim 1, wherein the first type of said anion exchange membranes is for fuel cells, it is made of quaternized-ammonium polyether ether ketone polymers.

3. Battery according to Claim 1, wherein the second type of said anion exchange membranes is for fuel cells, it is made of quaternary-ammonium polyether sulfone ketone polymers.

4. Battery according to Claim 1, wherein the third type of said anion exchange membranes has been tried for fuel cells recently, it is made of quaternary phosphonium salt functional groups polymers.

5. Battery according to Claims 1 to 4, wherein the said anion exchange membranes are used for Fe/Cr flow batteries, their selectivity to Cl⁻is required with the permeability of iron ion Fe3⁺, <150µg Fe³⁺/hr•cm²•M.

6. Battery according to Claims 1 to 4, wherein meanwhile their conductivity, with the transfer of Cl⁻ through the membranes dominantly, is required with the values of ≥ 0.006 S•cm⁻¹ at room temperature and atmospheric pressure, or their resistivity with the values of <2.5Ω•cm².

7. Battery according to Claims 1 to 4, wherein the said anion exchange membranes are used for Fe/Cr flow batteries, their thickness is required between 50 ∼ 300 µm.

8. Battery according to Claims 1 to 4, wherein the said Fe/Cr redox flow batteries are composed of those anion exchange membranes, they are referred as to either single cells or cell stacks by folding multiple cells over each other.
